# EUROPEAN PATENT APPLICATION

(11) **EP 4 521 269 A1**
(43) Date of publication of application: **12.03.2025**
(21) Application number: 23888001.7
(22) Date of filing: 07.11.2023
(51) Int. Cl.: G06F 16/9535

(54) **SEARCH METHOD AND APPARATUS, ELECTRONIC DEVICE AND STORAGE MEDIUM**

(30) Priority: 07.11.2022 CN 202211387509
(71) Applicant: Beijing Zitiao Network Technology Co., Ltd., Beijing 100190 (CN)
(72) Inventor: YANG, Pei, Beijing 100028 (CN); CAO, Kuanyi, Beijing 100028 (CN)
(74) Representative: Williams, Michael David
(86) International application number: PCT/CN2023/130192
(87) International publication number: WO 2024/099312

(57) **Abstract**

Provided are a search method and apparatus, an electronic device and a storage medium. The method comprises: receiving a search operation for a target subject, the target subject comprising a participation subject of a target event (S101); and, in response to the search operation, displaying on a search result page a subject card of the target subject, wherein the subject card comprises a first area and a second area, the first area being used for playing a subject video of the target subject, and the second area being used for displaying information of a sub-event in which the target subject participates in the target event (S102).

## Description

The present application claims the priority of Chinese Patent Application No. 202211387509.7 filed on November 7, 2022, the disclosure of which is incorporated by reference herein in its entirety as part of the present application.

### TECHNICAL FIELD

An embodiment of the present disclosure relates to a search method, a search apparatus, an electronic device, and a storage medium.

### BACKGROUND

In general, when searching for athletes, only the brief introduction information of athletes will be displayed, and the displayed content is relatively simple.

### SUMMARY

Embodiments of the present disclosure provides a search method, a search apparatus, an electronic device, and a storage medium, thus enriching information displayed when searching for athletes.

An embodiment of the present disclosure provides a search method, comprising:
receiving a search operation for a target object, wherein the target object comprises a participating object of a target event;
displaying an object card of the target object in a search result page in response to the search operation, wherein the object card comprises a first area and a second area, the first area is configured to play an object video of the target object, and the second area is configured to display information of a sub-event, which the target object participates in, in the target event.

An embodiment of the present disclosure further provides a search apparatus, comprising:
an operation receiving module, configured to receive a search operation for a target object, wherein the target object comprises a participant object of a target event; and
a card displaying module, configured to display an object card of the target object in a search result page in response to the search operation, wherein the object card comprises a first area and a second area, the first area is configured to play an object video of the target object, and the second area is configured to display information of a sub-event, which the target object participates in, in the target event.

An embodiment of the present disclosure further provides an electronic device, comprising:
at least one processor; and
a memory in communication connection with the at least one processor,
wherein the memory is configured to store a computer program being executed by the at least one processor, and the computer program, when executed by the at least one processor, enables the at least one processor to execute the search method as described in the embodiments of the present disclosure.

An embodiment of the present disclosure further provides a computer readable storage medium, wherein the computer readable storage medium is configured to store a computer instruction, and the computer instruction, when executed by a processor, implements the search method as described in the embodiments of the present disclosure.

### BRIEF DESCRIPTION OF DRAWINGS

The above and other features, advantages, and aspects of each embodiment of the present disclosure may become more apparent by combining drawings and referring to the following specific implementation modes. In the drawings throughout, same or similar drawing reference signs represent same or similar elements. It should be understood that the drawings are schematic, and originals and elements may not necessarily be drawn to scale.
Fig. 1 is a flow diagram of a search method according to an embodiment of the present disclosure;
Fig. 2 is a schematic display diagram of a search result page according to an embodiment of the present disclosure;
Fig. 3 is a schematic display diagram of another search result page according to an embodiment of the present disclosure;
Fig. 4 is a schematic display diagram of an object card according to an embodiment of the present disclosure;
Fig. 5 is a schematic display diagram of another object card according to an embodiment of the present disclosure;
Fig. 6 is a flow diagram of another search method according to an embodiment of the present disclosure;
Fig. 7 is a structural block diagram of a search apparatus according to an embodiment of the present disclosure; and
Fig. 8 is a schematic structural diagram of an electronic device according to an embodiment of the present disclosure.

### DETAILED DESCRIPTION

Embodiments of the present disclosure are described in more detail below with reference to the drawings. Although certain embodiments of the present disclosure are shown in the drawings, it should be understood that the present disclosure may be achieved in various forms and should not be construed as being limited to the embodiments described here. On the contrary, these embodiments are provided to understand the present disclosure more clearly and completely. It should be understood that the drawings and the embodiments of the present disclosure are only for exemplary purposes and are not intended to limit the scope of protection of the present disclosure.

It should be understood that various steps recorded in the implementation modes of the method of the present disclosure may be performed according to different orders and/or performed in parallel. In addition, the implementation modes of the method may include additional steps and/or steps omitted or unshown. The scope of the present disclosure is not limited in this aspect.

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that concepts such as "first" and "second" mentioned in the present disclosure are only used to distinguish different apparatuses, modules or units, and are not intended to limit orders or interdependence relationships of functions performed by these apparatuses, modules or units.

Modifications of "one" and "more" mentioned in the present disclosure are schematic rather than restrictive, and those skilled in the art should understand that unless otherwise explicitly stated in the context, it should be understood as "one or more".

Names of messages or information exchanged among multiple apparatuses in the implementation mode of the present disclosure are only used for illustrative purposes, and are not intended to limit the scope of these messages or information.

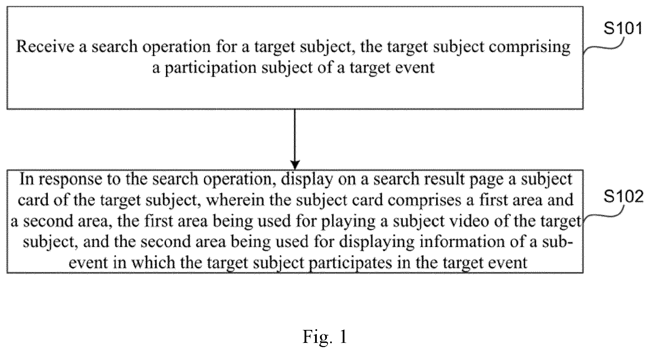

Fig. 1 is a flow diagram of a search method according to an embodiment of the present disclosure. The method may be executed by a search apparatus. The apparatus may be implemented by software and/or hardware, and can be configured in an electronic device. For example, the apparatus can be configured in a mobile phone, a tablet PC, or a computer. The search method provided by an embodiment of the present disclosure is suitable for a scenario of searching for athletes or teams. As shown in Fig. 1, the search method provided by this embodiment may include:

S101. A search operation for a target object is received, the target object includes a participating object of a target event.

The target object may be an object to be searched, which may include a participating object of the target event. The target event, for example, may be a sports meeting or other competition events. The participating object may be understood as an object participating in the target event, such as a participating team and/or a participant of the target event. The search operation may be configured to indicate a trigger operation for searching the target object, such as an operation for triggering a search control after information to be searched related to the target object is input in a search input box. The information to be searched, for example, may be a name or nickname of the participant and/or the participating team, and so on.

In this embodiment, the user may input the information to be searched related to the target object in the search input box, and execute the search operation. Accordingly, a current application may receive the search operation of the user.

For example, the user inputs a name of a participating object to be searched in the search input box, and triggers a search control. Therefore, when detecting that the user triggers the trigger control, the current application can acquire the name of the participating object input in the input box by the user, take the participating object corresponding to the name as the target object, and determines that the search operation for the target object is received.

S102. An object card of the target object is displayed in a search result page in response to the search operation, the object card includes a first area and a second area, the first area is configured to play an object video of the target object, and the second area is configured to display information of a sub-event, which the target object participates in, in the target event.

The object card may be a card for displaying related information of the target object, and the related information, for example, may include the object video of the target object, and the information of a sub-event. Accordingly, the object card may include a first area configured to play the object video of the target object, and a second area configured to display the information of the sub-event of the target object in the target event.

The object video may include a live streaming video and/or non-live streaming video of the target event that the target object participates in. The non-live streaming video, for example, may be an associated video of the target object in the target event. Taking the target event being a competition as an example, the non-live streaming video may be a match video, such as match highlights, match information and/or a live replay video. The information of the sub-event may be information of a corresponding sub-event, such as a name of the sub-event, beginning and ending time of the sub-event, progress information of the sub-event, information of a participating object of the sub-event, a state of the sub-event, and/or a result of the sub-event. The information of the participating object of the sub-event, for example, may include an identifier of the participating object, and/or the name of the participating object. The identifier of the participating object, for example, may include a national flag, a team flag, or a team emblem of the participating object, etc. The state of the sub-event may include unstarted, in-progress, and ended. Accordingly, the information of the sub-event may be information of an unstarted sub-event, information of an in-progress sub-event, and information of an ended sub-event. Exemplary, when the target event is a match event, the information of the sub-event may be schedule information.

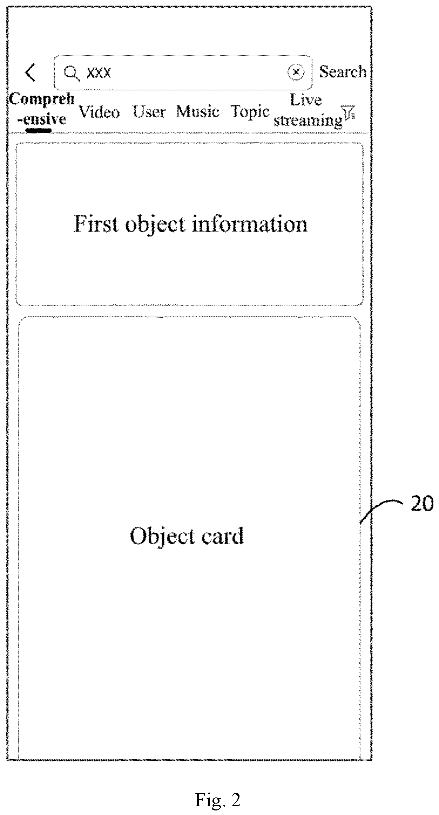

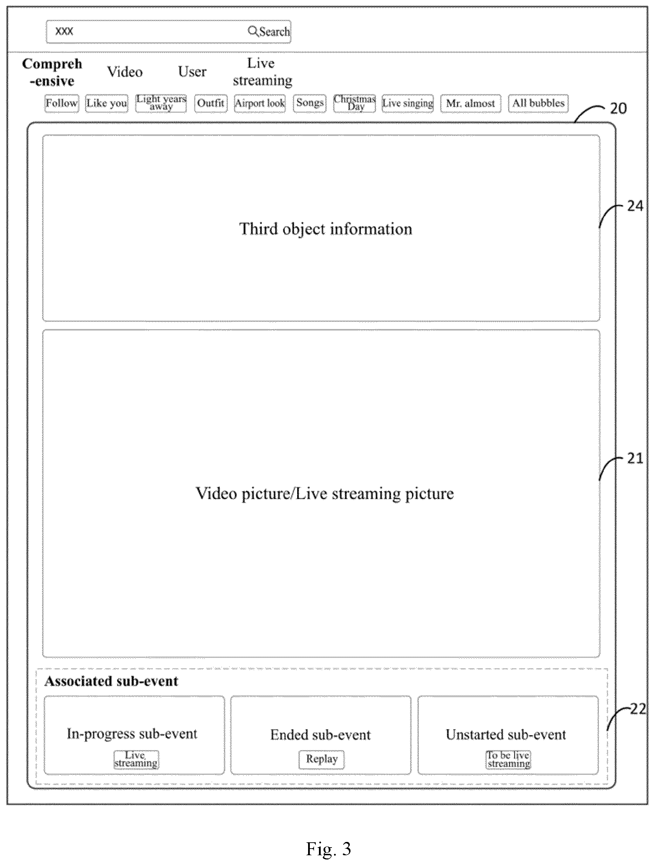

In this embodiment, when receiving the search operation for the target object, an object card 20 of the target object can be displayed in the search result page in response to the search operation. For example, when receiving the search operation for a certain participant, the object card 20 of the participant can be displayed in the search result page, as shown in Fig. 2. When receiving a search operation for a certain participating team, the object card 20 of the participating team can be displayed in the search result page, as shown in Fig. 3.

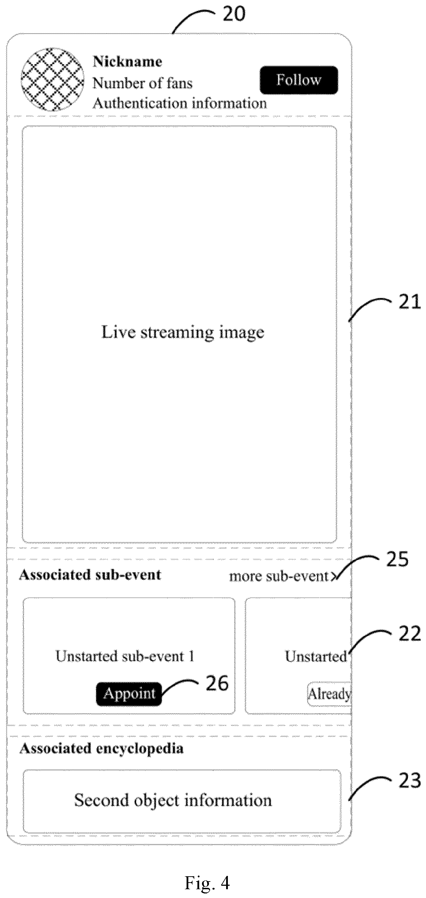

Exemplary, when there is a live streaming for the searched target object, for example, when the target object is participating in a certain sub-event in the target event, a live streaming image of the sub-event can be displayed in the first area 21 of the object card 20, as shown in Fig. 3 and Fig. 4. Therefore, the user can watch the live streaming image of the target object through the object card 20, or instruct the current application to display a live streaming page of the sub-event by triggering the first area 21, thus watching the live streaming image of the target object in the live streaming page.

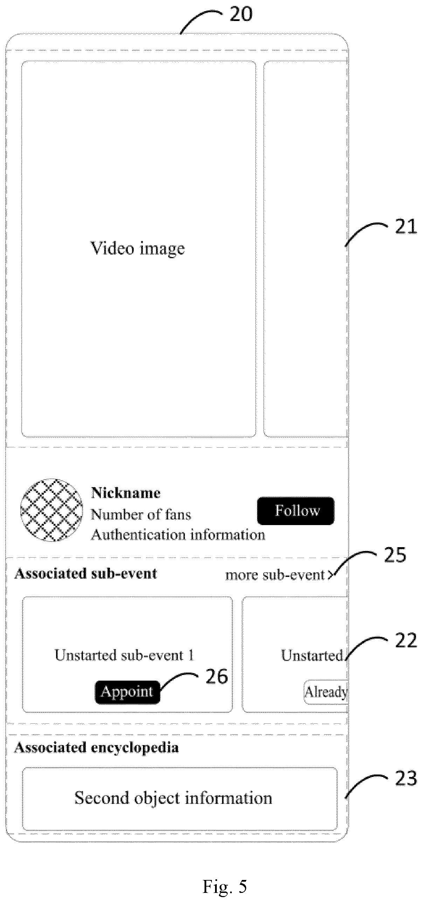

When there is no live streaming for the searched target object, a non-live streaming video of the target object can be displayed in the object card 20, for example, an associated video such as match highlights, match information and/or live replay video of the target object can be displayed in the first area 21 of the object card 20 of the target object, as shown in Fig. 3 and Fig. 5. Therefore, the user can watch the associated video of the target object through the object card 20, and switch the currently played associated video in the first area 21 of the object card 20 by executing a video switching operation, or instruct the current application to display a video playback page by triggering a certain associated video played or displayed in the object card 20, thus watching the associated video of the target object in the video playback page. The video switching operation may be considered as an operation for instructing to switch the currently played video in the object card 20, such as an operation of sliding in a preset direction in the first area 21 of the object card 20, or an operation for triggering the video switch control. The preset direction may be a transverse direction, a longitudinal direction, or other directions, which is not limited in this embodiment. A partial video cover of the next associated video may further be displayed in the first area 21 of the object card 20 to prompt the user to switch to watch different associated videos of the target object.

It may be understood that the search method provided by the embodiment of the present disclosure may be applied to a client, or a website application. For example, the search method provided by the embodiment of the present disclosure may be applied in a client installed in a mobile phone, a tablet PC and/or a computer, or in the Web side, which is not limited in this embodiment.

In some implementation modes, when the object card of the participant is displayed in response to the search operation for the participant of the target event, first object information of the participant may further be displayed in the search result page. For example, the first object information of the participant is displayed at the upper side of the object card. In this case, optionally, the target object includes the participant, and the first object information of the target object is further displayed in the search result page. The first object information may be understood as object information of the target object other than those displayed in the object card, such as basic information of the target object. The basic information, for example, may include name, age, height and weight of the participant, information of participating in the target event, a location to participate in the target event, and/or the number of times to participate in the target event, etc.

In some implementation modes, when the object card of the participant is displayed in response to the search operation for the participant of the target event, the object card of the participant may further include a third area configured to display second object information of the participant. Therefore, the user can view the second object information of the target object through the object card, and view detailed information of the target object by triggering the second object information. In this case, optionally, the target object includes the participant, the object card further includes the third area configured to display the second object information of the target object. The second object information is configured to trigger the displaying of the detailed information of the target object. The third area may be an area configured to display the second object information of the participant. The second object information may be understood as object information of the target object displayed in the object card, which may be object information different from the first object information, for example, the second object information may be brief introduction information of the target object.

Exemplary, as shown in Fig. 2, when receiving the search operation for the participant, the first object information of the participant and the object card 20 (e.g., a personnel card) of the participant can be displayed in the search result page. For a situation that the participant is participating in a certain sub-event of the target event, a live streaming image of the participant is displayed in the first area 21 of the object card 20, the information of the sub-event in which the participant participates is displayed in the second area 22 of the object card 20, and the second object information of the participant is displayed in the third area 23 of the object card 20, as shown in Fig. 4. For a situation that the sub-event in which the participant participates has not started or has already ended, the associated video of the participant is displayed in the first area 21 of the object card 20, the information of the sub-event of the participant is displayed in the second area 22 of the object card 20, and the second object information of the participant is displayed in the third area 23 of the object card 20, as shown in Fig. 5.

In addition, as shown in Fig. 4 and Fig. 5, the object card 20 may further include another area besides the first area 21, the second area 22, and the third area 23, which may be configured to display related information of the participant in the current application. For example, when the participant has an account in the current application, an avatar, a nickname, the number of fans and registration authentication information of the participant in the current application can be displayed in this area, and a following control can be further displayed for the user to follow the participant in the current application by triggering the following control.

In some implementation modes, when the object card of the participating team is displayed in response to the search operation for the participating team of the target event, the object card of the participant may further include a fourth area for displaying third object information of the participating team. The third object information may be understood as team information of the participating team, such as at least one selected from the group of a name of the team, the current ranking of the team, a core description of the team, information of members in the team (including the information of the participant), and establishment time of the team. The information of the participant may be understood as the information of the participant, such as an avatar and/or name of the participant. Therefore, the user can view the information of different members in the team by executing an information switch operation, and/or execute the search operation for the participant corresponding to the information of the participant by triggering the information of a certain participant. In this case, optionally, the target object includes a participating team, and the object card further includes a fourth area configured to display the third object information of the target object, and the third object information includes the information of the participant, and the information of the participant is configured to trigger the execution of the search operation for a corresponding participant. The information switch operation may be a trigger operation configured to instruct to switch the information of the participant displayed in the object card, such as an operation for triggering the information switch control, or an operation of sliding in a preset direction in the fourth area. The preset direction is not limited in this embodiment.

Exemplary, as shown in Fig. 3, when receiving the search operation for the participating team, the object card 20 (e.g., a team card) of the participating team can be displayed in the search result page, an associated video of the participating team can be displayed in the first area 21 of the object card 20, the information of the sub-event, which the participating team participates in, in the target event can be displayed in the second area 22 of the object card 20, and the third object information of the participating team can be displayed in the fourth area 24 of the object card 20.

In addition, besides the object card of the target object, other search results for the target object may further be displayed in the search results page, such that the user can further filter the search results of the target object by triggering different filtering identifiers displayed in the search result page. The filtering identifiers, for example, may include primary filtering identifiers such as "Comprehensive", "Video", "User", "Music" or "Topic" as shown in Fig. 2 and Fig. 3, and each primary filtering identifier may, or may not, have secondary filtering identifiers, which, for example, may include "All", "Like you", "Light years away", "Outfit", "Airport look", "Songs", "Christmas" or "Live singing" under the "Comprehensive" filtering identifier as shown in Fig. 3.

In this embodiment, the information of the sub-event may include information of an unstarted sub-event, information of an in-progress sub-event, and information of an ended sub-event. The information of the unstarted sub-event may be understood as information of a sub-event that has not started, such as the information of the sub-event that the live streaming has not started. The information of the in-progress event may be understood as information of a sub-event that is in progress, such as the information of the sub-event that the live streaming is in progress. The information of the ended sub-event may be understood as information of a sub-event that has ended, such as the information of the sub-event that the live streaming has ended. Exemplary, the information of the unstarted sub-event may include information of the participating object, the name of the sub-event, beginning and ending time of the sub-event, and other information. The information of the in-progress sub-event may include the information of the participating object, the name of the sub-event, the progress of the sub-event, and other information. The information of the ended sub-event may include the information of the participating object, the name of the sub-event, the beginning and ending time of the sub-event, a result of the sub-event, and other information.

In this embodiment, information of one or more sub-events may be displayed in the second area of the object card, the information of the sub-event, for example, may include the information of the unstarted sub-event, the information of the in-progress event, and/or the information of the ended sub-event. The information of the sub-events may all be configured to trigger the execution of a first page display operation. In this case, optionally, after the object card of the target object is displayed in the search result page, the method further includes the following steps: displaying a sub-event details page of the target event in response to the first page display operation acting on information of a target sub-event, and displaying detailed information of the information of the target sub-event at a preset position of the sub-event details page, the information of the target sub-event information includes at least one selected from the group of the information of the unstarted sub-event, the information of the in-progress sub-event, and the information of the ended sub-event.

The first page display operation may be an operation for triggering the information of a certain sub-event displayed in the second area. The information of the target sub-event may be sub-event information to which the first page display operation is applied, which may be the information of the unstarted sub-event, the information of the in-progress sub-event, or the information of the ended sub-event. The preset area may be a region which is set in advance, such as a display area of the information of a first sub-event. The sub-event details page may be a page for displaying detailed information of the information of part or all of sub-events of the target event.

Specifically, when detecting that the user triggers the information of a certain sub-event displayed in the second area, the sub-event details page can be displayed, and the detailed information of the information of the sub-event triggered by the user is displayed in the preset area of the sub-event details page, such as, pinning the detailed information of the information of the sub-event triggered by the user at the top of the sub-event details page.

In some implementation modes, after displaying the object card of the target object in the search result page, the method further includes the following step: displaying the sub-event details page of the target event in response to a third page display operation acting in the second area, the third page display operation includes a preset sliding operation.

The third display operation may be a trigger operation for instructing to display the sub-event details page of the target-event, which may be an operation different from the operation for triggering the information of the sub-event displayed in the second area, such as a preset sliding operation, or an operation for triggering a corresponding control in the second area. The preset sliding operation may be an operation for continuously sliding after sliding to the information of the last sub-event displayed in the second area. The corresponding control may be a control for instructing to display the sub-event details page, such as a more sub-event control.

Specifically, when the third page display operation acting in the second area 22 of the object card 20 is received, for example, when detecting that the user triggers a more sub-event control 25 (as shown in Fig. 4 and Fig. 5) or executes the preset sliding operation, the sub-event details page of the target event can be displayed.

Taking the transverse arrangement of the information of sub-events in the preset area as an example, the second area may be configured to display the information of sub-events not exceeding the preset number, and the user can switch to view the information of different sub-events through a transverse sliding operation. When the user continuously slides leftwards after sliding leftwards to the information of the last sub-event displayed in the second area, the current application can determine that the third page display operation is received, and display the sub-event details page of the target event in response to the page display operation. The preset number, for example, may be three, five, etc., which may be specifically set as required.

The search method provided by this embodiment includes the following steps: receiving the search operation for the target object, the target object includes a participating object of the target event; and displaying an object card of the target object in the search result page in response to the search operation, the object card includes a first area and a second area, the first area is configured to play an object video of the target object, and the second area is configured to display the information of a sub-event of the target object in the target event. In this embodiment, by adopting the above technical solution, when the user searches for a participating object of the target event, the object card of the participating objected searched by the user is displayed, and the object video of the participating object, the information of the sub-event, and other information are displayed through the object card by partition, such that the comprehensiveness and orderliness of the information displayed when searching for the participating object can be improved, and the structured display of the information can be achieved.

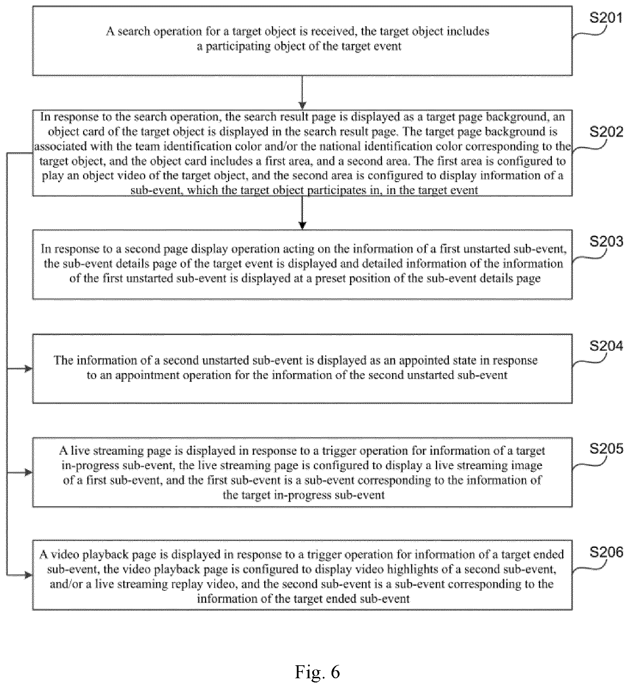

Fig. 6 is a flow diagram of another search method according to an embodiment of the present disclosure. The solution in this embodiment may be combined with one or more solutions in above embodiments. Optionally, after displaying the object card of the target object in the search result page, the method further includes at least one step of the following: in response to a second page display operation acting on information of a first unstarted sub-event, displaying the sub-event details page of the target event, and displaying detailed information of the information of the first unstarted sub-event at a preset position of the sub-event details page; in response to an appointment operation for the information of the second unstarted sub-event, displaying information of a second unstarted sub-event as an appointed state; displaying a live streaming page in response to a trigger operation for information of a target in-progress sub-event, the live streaming page is configured to display a live streaming image of a first sub-event, and the first sub-event is a sub-event corresponding to the information of the target in-progress sub-event; and displaying a video replay page in response to a trigger operation for information of a target ended sub-event, the video replay page is configured to playback video highlights of a second sub-event, and/or a live streaming replay video, and the second sub-event is a sub-event corresponding to the information of the target ended sub-event.

Optionally, the search method provided by this embodiment further includes the following step: displaying the search result page as a target page background in response to the search operation, the target page background is associated with a team identification color and/or a national identification color corresponding to the target object.

Accordingly, as shown in Fig. 6, the search method provided in this embodiment may include:
S201. A search operation for a target object is received, the target object includes a participating object of the target event.
S202. In response to the search operation, the search result page is displayed as a target page background, an object card of the target object is displayed in the search result page, and at least one step selected from S203 to S206 is executed. The target page background is associated with the team identification color and/or the national identification color corresponding to the target object, and the object card includes a first area, and a second area. The first area is configured to play an object video of the target object, and the second area is configured to display information of a sub-event, which the target object participates in, in the target event.

When the target page background may be considered to display the object card of the target object in response to the search operation for the target object, a page background of the search result page may be associated with the team identification color and/or national identification color corresponding to the target object. The team identification color may be an identification color of the participating team, such as the color of team uniform of the participating team. The national identification color may be an identification color of a participating country to which the target object belongs, such as the color of the national flag of the corresponding country, the color of the national emblem, or nationally accepted color.

Specifically, when the object card of the participating object is displayed in response to the search operation for the participating object in the target event, the search result page can be further displayed as the page background associated with the team identification color and/or national identification color corresponding to the participating object. For example, the page background of the search result page is displayed as a pattern and/or color associated with the team identification color and/or national identification color corresponding to the participating object.

Exemplary, when the target object is the participant, a background color of the search result page can be determined according to the color of the team uniform of the participating team to which the participant belongs, the color of national flag of the participating country to which the participant belongs, the nationally accepted color, and/or a personal color of the participant, and a page background of the search result page is generated based on the background color. When the target object is the participating team, the background color of the search result page can be determined according to the color of the team uniform of the participating team, the color of the national flag of the participating country to which the participating team belongs, and/or the nationally accepted color, and the page background of the search result page is generated based on the background color. The personal color, for example, may be favorite color of the participant, or the characteristic color of the participant. A specific determination mode of the background color is not limited in this embodiment.

In this embodiment, when the target page background is used as the page background of the search result, a card background of the object card of the target object may be a preset background, or a background associated with the target object or the target page background, which may be specifically set as required.

S203. In response to a second page display operation acting on the information of a first unstarted sub-event, the sub-event details page of the target event is displayed and detailed information of the information of the first unstarted sub-event is displayed at a preset position of the sub-event details page.

The second page display operation may be a trigger operation for instructing to display the sub-event details page, such as an operation for triggering information of a certain unstarted sub-event displayed in the second area. The information of the first unstarted non-event may be information of an unstarted sub-event to which the second page display operation is applied.

In this embodiment, the sub-event details page is displayed when only the information of the unstarted sub-event displayed in the second area is triggered, while the sub-event details page isn't displayed when the information of the in-progress sub-event and/or the information of the ended sub-event displayed in the second area are/is triggered.

Exemplary, when the second page display operation acting on the information of a certain unstarted sub-event is received, for example, when detecting that the user triggers the information of a certain unstarted sub-event displayed in the second area, the sub-event details page of the target event can be displayed, and the detailed information of the information of the sub-event triggered by the user can be displayed at a preset position of the sub-event details page.

S204. The information of a second unstarted sub-event is displayed as an appointed state in response to an appointment operation for the information of the second unstarted sub-event.

The appointment operation may be a trigger operation for appointing to watch a live streaming of a sub-event corresponding to the information of a certain unstarted sub-event, such as an operation for triggering an appointment control corresponding to the information of a certain unstarted sub-event. The information of the second unstarted sub-event may be the information of the unstarted sub-event targeted by the preset operation.

In this embodiment, when there is the information of the unstarted sub-event displayed in the second area 22, an appointment control 26 corresponding to the information of the unstarted sub-event may be further displayed, as shown in Fig. 4 and Fig. 5, thus allowing the user to execute the appointment operation, and simplifying the operation required by the user to make an appointment to watch the live streaming of the corresponding unstarted sub-event.

Therefore, when the current application receives an appointment operation for the information of a certain unstarted sub-event displayed in the second area 22, for example, when detecting that the user triggers the appointment control 26 corresponding to the information of a certain unstarted sub-event, the information of the unstarted sub-event corresponding to the appointment operation can be displayed as an appointed state. For example, the appointment control corresponding to the information of the unstarted sub-event is displayed as the appointed state, and the live streaming of the sub-event corresponding to the information of the sub-event can be added to an appointed live streaming list of the user, thus promoting the user to watch when the live streaming of the sub-event starts.

S205. A live streaming page is displayed in response to a trigger operation for information of a target in-progress sub-event, the live streaming page is configured to display a live streaming image of a first sub-event, and the first sub-event is a sub-event corresponding to the information of the target in-progress sub-event.

The information of the target in-progress sub-event may be the information of an in-progress sub-event triggered by the user. The first sub-event may be a sub-event corresponding to the information of the target in-progress sub-event.

Specifically, when detecting that the user triggers the information of a certain in-progress sub-event displayed in the second area, a current page can be switched from the search result page to the live streaming page, and a live streaming image of the sub-event corresponding to the information of the sub-event can be displayed in the live streaming page, thus simplifying an operation required for watching the live streaming of the sub-event.

S206. A video playback page is displayed in response to a trigger operation for information of a target ended sub-event, the video playback page is configured to display video highlights of a second sub-event, and/or a live streaming replay video, and the second sub-event is a sub-event corresponding to the information of the target ended sub-event.

The information of the target ended sub-event may be information of an ended sub-event triggered by the user. The second sub-event may be a sub-event corresponding to the information of the target ended sub-event.

Specifically, when detecting that the user triggers information of a certain ended sub-event displayed in the second area, the current page can be switched from the search result page to the video playback page, and video highlights and/or live streaming replay video of the sub-event corresponding to the information of the ended sub-event can be played in the video playback page, thus facilitating the user to watch wonderful moments of the sub-event, or watch the live streaming replay of the sub-event.

The search method provided by this embodiment can enrich the display mode of the search result page and the interactive mode of the information of sub-events, and simplify the operations required by the user to appoint to watch the live streaming of the target event, watch the live streaming of the target vent, watch video highlights of the target event, and replay the live streaming of the target event.

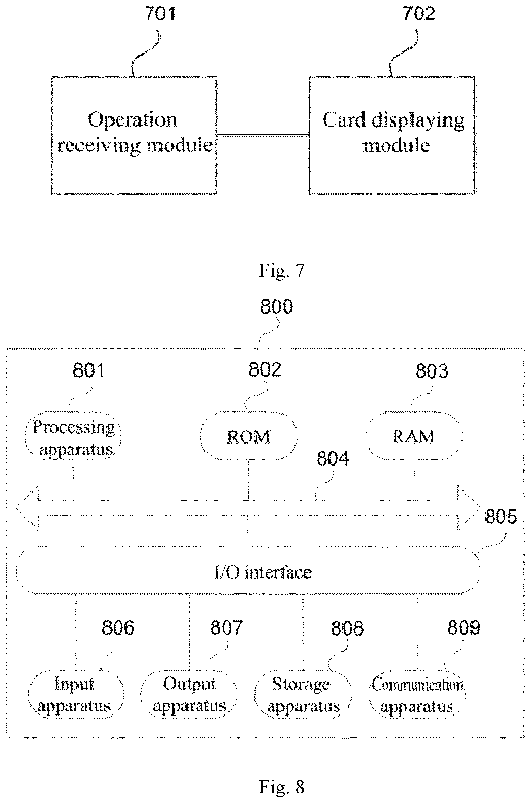

Fig. 7 is a structural block diagram of a search apparatus according to an embodiment of the present disclosure. The apparatus may be implemented by software and/or hardware, and can be configured in an electronic device. For example, the apparatus can be configured in a mobile phone, a tablet PC, or a computer, and can be configured to execute the search method for searching for the athletes or teams. As shown in Fig. 7, the search apparatus provided by this embodiment may include:
an operation receiving module 701, configured to receive a search operation for a target object, the target object includes a participant object of a target event;
a card displaying module 702, configured to display an object card of the target object in a search result page in response to the search operation, the object card includes a first area and a second area, the first area is configured to play an object video of the target object, and the second area is configured to display information of a sub-event, which the target object participates in, in the target event.

The search apparatus provided by this embodiment is configured to receive the search operation for the target object through the operation receiving module. The target object includes the participating object of the target event. In response to the search operation, the object card of the target object is displayed in the search result page through the card displaying module. The object card includes the first area, and the second area. The first area is configured to play the object video of the target object, and the second area is configured to display the information of the sub-event of the target object in the target event. In this embodiment, by adopting the above technical solution, when a user searches for the participating object of the target event, the object card of the participating object searched by the user is displayed, and the information such as the object video of the participating object and the information of the sub-event is displayed through the object card by partition, such that the comprehensiveness and orderliness of the information displayed when searching for the participant can be improved, and the structured display of the information can be achieved.

Further, the search apparatus provided by this embodiment may include: a first page displaying module, configured to display a sub-event details page of the target event and display detailed information of the information of the target sub-event at a preset position of the sub-event details page, in response to a first page display operation acting on a target sub-event information after displaying the object card of the target object in the search result page, the information of the target sub-event includes at least one selected from the group of information of an unstarted sub-event, information of an in-progress sub-event, and information of an ended sub-event.

Further, the search apparatus provided by this embodiment may include at least one of the following: a second page displaying module, configured to display the sub-event details page of the target event and display detailed information of the information of the first unstarted sub-event at a preset position of the sub-event details page, in response to a second page display operation acting on the information of a first unstarted sub-event after displaying the object card of the target object in the search result page; an appointment module, configured to display the information of a second unstarted sub-event as an appointed state in response to an appointment operation for the second unstarted sub-event information after displaying the object card of the target object in the search result page; a live streaming page displaying module, configured to display a live streaming page in response to a trigger operation for information of a target in-progress sub-event after displaying the object card of the target object in the search result page, the live streaming page is configured to display a live streaming image of a first sub-event, and the first sub-event is a sub-event corresponding to the information of the target in-progress sub-event; and a playback page displaying module, configured to display a video playback page in response to a trigger operation for information of a target ended sub-event after displaying the object card of the target object in the search result page, the video playback page is configured to display video highlights of the second sub-event, and/or a live replay video, and the second sub-event is a sub-event corresponding to the information of the target ended sub-event.

Further, the search apparatus provided by this embodiment may further include: a third page displaying module, configured to display the sub-event details page of the target event in response to a third page display operation acting in the second area after displaying the object card of the target object in the search result page, the third page display operation includes a preset sliding operation.

In the above solution, the target object may include a participant, and the first object information of the target object may be further displayed in the search result page; and/or the object card may further include a third area, and the third area is configured to display second object information of the target object, and the second object information is configured to trigger the displaying of detailed information of the target object.

In the above solution, the target object may include a participating team. The object card may further include a fourth area, and the fourth area may be configured to display third object information of the target object. The third object information may include information of the participant, and the information of the participant may be configured to trigger a search operation for a corresponding participant.

In the above solution, the card displaying module 702 may further be configured to: display the search result page as a target page background in response to the search operation, the target page background is associated with a team identification color and/or a national identification color corresponding to the target object.

The search apparatus provided by an embodiment of the present disclosure may execute the search method provided by any embodiment of the present disclosure, which has a corresponding functional module for executing the search method and beneficial effects. Technical details not described in detail in this embodiment may refer to the search method provided by any embodiment of the present disclosure.

Referring to FIG. 8, Fig. 8 illustrates a schematic structural diagram of an electronic device 800 suitable for implementing some embodiments of the present disclosure. The electronic devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic device illustrated in Fig. 8 is merely an example, and should not pose any limitation to the functions and the range of use of the embodiments of the present disclosure.

As illustrated in Fig. 8, the electronic device 800 may include a processing apparatus 801 (e.g., a central processing unit, a graphics processing unit, etc.), which can perform various suitable actions and processing according to a program stored in a read-only memory (ROM) 802 or a program loaded from a storage apparatus 808 into a random-access memory (RAM) 803. The RAM 803 further stores various programs and data required for operations of the electronic device 800. The processing apparatus 801, the ROM 802, and the RAM 803 are interconnected by means of a bus 804. An input/output (I/O) interface 805 is also connected to the bus 804.

Usually, the following apparatus may be connected to the I/O interface 805: an input apparatus 806 including, for example, a touch screen, a touch pad, a keyboard, a mouse, a camera, a microphone, an accelerometer, a gyroscope, or the like; an output apparatus 807 including, for example, a liquid crystal display (LCD), a loudspeaker, a vibrator, or the like; a storage apparatus 808 including, for example, a magnetic tape, a hard disk, or the like; and a communication apparatus 809. The communication apparatus 809 may allow the electronic device 800 to be in wireless or wired communication with other devices to exchange data. While Fig. 8 illustrates the electronic device 800 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 809 and installed, or may be installed from the storage apparatus 808, or may be installed from the ROM 802. When the computer program is executed by the processing apparatus 801, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to: display a background image; display an initial picture of a target visual effect at a preset position of the background image; control the target visual effect to gradually change from the initial picture to a target picture in response to a visual effect change instruction triggered by a user; and adjust a filter effect of the background image to allow the filter effect of the background image to gradually change from a first filter effect to a second filter effect during a change of the target visual effect.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the present disclosure, Example 1 provides a search method, comprising:
receiving a search operation for a target object, wherein the target object comprises a participating object of a target event;
displaying an object card of the target object in a search result page in response to the search operation, wherein the object card comprises a first area and a second area, the first area is configured to play an object video of the target object, and the second area is configured to display information of a sub-event, which the target object participates in, in the target event.

According to one or more embodiments of the present disclosure, Example 2 according to the method described in Example 1, after the displaying the object card of the target object in the search result page, the method further comprises:
in response to a first page display operation acting on a target sub-event information, displaying a sub-event details page of the target event and displaying detailed information of the information of the target sub-event at a preset position of the sub-event details page, wherein the information of the target sub-event comprises at least one selected from the group of information of an unstarted sub-event, information of an in-progress sub-event, and information of an ended sub-event.

According to one or more embodiments of the present disclosure, Example 3 according to the method described in Example 1, the method further comprises at least one of the following:
in response to a second page display operation acting on information of a first unstarted sub-event, displaying the sub-event details page of the target event and displaying detailed information of information of the first unstarted sub-event at a preset position of the sub-event details page;
displaying information of a second unstarted sub-event as an appointed state in response to an appointment operation for the information of the second unstarted sub-event;
displaying a live streaming page in response to a trigger operation for information of a target in-progress sub-event, wherein the live streaming page is configured to display a live streaming image of a first sub-event, and the first sub-event is a sub-event corresponding to the information of the target in-progress sub-event; and
displaying a video playback page in response to a trigger operation for information of a target ended sub-event, wherein the video playback page is configured to display video highlights of a second sub-event, and/or a live streaming replay video, and the second sub-event is a sub-event corresponding to the information of the target ended sub-event.

According to one or more embodiments of the present disclosure, Example 4 according to the method described in Example 1, after the displaying the object card of the target object in the search result page, the method further comprises :
displaying the sub-event details pages of the target event in response to a third page display operation acting in the second area, wherein the third page display operation comprises a preset sliding operation.

According to one or more embodiments of the present disclosure, Example 5 according to the method described in Example 1, the target object comprises a participant, and first object information of the target object is further displayed in the search result page; and/or the object card further comprises a third area, the third area is configured to display second object information of the target object, and the second object information is configured to trigger the displaying of detailed information of the target object.

According to one or more embodiments of the present disclosure, Example 6 according to the method described in Example 1, the target object comprises a participating team, and the object card further comprises a fourth area, wherein the fourth area is configured to display third object information of the target object, the third object information comprises information of the participant, and the information of the participant is configured to trigger execution of a search operation for a corresponding participant.

According to one or more embodiments of the present disclosure, Example 7 according to the method described in any one of Examples 1-6, further comprising:
displaying the search result page as a target page background in response to the search operation, wherein the target page background is associated with a team identification color and/or a national identification color corresponding to the target object.

According to one or more embodiments of the present disclosure, Example 8 provides a search apparatus, comprising:
an operation receiving module, configured to receive a search operation for a target object, wherein the target object comprises a participant object of a target event; and
a card displaying module, configured to display an object card of the target object in a search result page in response to the search operation, wherein the object card comprises a first area and a second area, the first area is configured to play an object video of the target object, and the second area is configured to display information of a sub-event, which the target object participates in, in the target event.

According to one or more embodiments of the present disclosure, Example 9 provides an electronic device, comprising:
at least one processor; and
a memory in communication connection with the at least one processor,
wherein the memory is configured to store a computer program being executed by the at least one processor, and the computer program, when executed by the at least one processor, enables the at least one processor to execute the search method according to any one of Examples 1 to 7.

According to one or more embodiments of the present disclosure, Example 9 provides a computer readable storage medium, wherein the computer readable storage medium is configured to store a computer instruction, and the computer instruction, when executed by a processor, implements the search method according to any one of examples 1 to 7.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims.

## Claims

1. A search method, comprising:
receiving a search operation for a target object, wherein the target object comprises a participating object of a target event;
displaying an object card of the target object in a search result page in response to the search operation, wherein the object card comprises a first area and a second area, the first area is configured to play an object video of the target object, and the second area is configured to display information of a sub-event, which the target object participates in, in the target event.

2. The method according to claim 1, wherein after the displaying the object card of the target object in the search result page, the method further comprises:
in response to a first page display operation acting on a target sub-event information, displaying a sub-event details page of the target event and displaying detailed information of the information of the target sub-event at a preset position of the sub-event details page, wherein the information of the target sub-event comprises at least one selected from the group of information of an unstarted sub-event, information of an in-progress sub-event, and information of an ended sub-event.

3. The method according to claim 1, wherein after the displaying the object card of the target object in the search result page, the method further comprises at least one of the following:
in response to a second page display operation acting on information of a first unstarted sub-event, displaying the sub-event details page of the target event and displaying detailed information of information of the first unstarted sub-event at a preset position of the sub-event details page;
displaying information of a second unstarted sub-event as an appointed state in response to an appointment operation for the information of the second unstarted sub-event;
displaying a live streaming page in response to a trigger operation for information of a target in-progress sub-event, wherein the live streaming page is configured to display a live streaming image of a first sub-event, and the first sub-event is a sub-event corresponding to the information of the target in-progress sub-event; and
displaying a video playback page in response to a trigger operation for information of a target ended sub-event, wherein the video playback page is configured to display video highlights of a second sub-event, and/or a live streaming replay video, and the second sub-event is a sub-event corresponding to the information of the target ended sub-event.

4. The method according to any one of claims 1 to 3, wherein after the displaying the object card of the target object in the search result page, the method further comprises :
displaying the sub-event details pages of the target event in response to a third page display operation acting in the second area, wherein the third page display operation comprises a preset sliding operation.

5. The method according to any one of claims 1 to 4, wherein the target object comprises a participant, and first object information of the target object is further displayed in the search result page; and/or the object card further comprises a third area, the third area is configured to display second object information of the target object, and the second object information is configured to trigger the displaying of detailed information of the target object.

6. The method according to any one of claims 1 to 5, wherein the target object comprises a participating team, and the object card further comprises a fourth area, wherein the fourth area is configured to display third object information of the target object, the third object information comprises information of the participant, and the information of the participant is configured to trigger execution of a search operation for a corresponding participant.

7. The method according to any one of claims 1 to 6, further comprising:
displaying the search result page as a target page background in response to the search operation, wherein the target page background is associated with a team identification color and/or a national identification color corresponding to the target object.

8. A search apparatus, comprising:
an operation receiving module, configured to receive a search operation for a target object, wherein the target object comprises a participant object of a target event; and
a card displaying module, configured to display an object card of the target object in a search result page in response to the search operation, wherein the object card comprises a first area and a second area, the first area is configured to play an object video of the target object, and the second area is configured to display information of a sub-event, which the target object participates in, in the target event.

9. An electronic device, comprising:
at least one processor; and
a memory in communication connection with the at least one processor,
wherein the memory is configured to store a computer program being executed by the at least one processor, and the computer program, when executed by the at least one processor, enables the at least one processor to execute the search method according to any one of claims 1 to 7.

10. A computer readable storage medium, wherein the computer readable storage medium is configured to store a computer instruction, and the computer instruction, when executed by a processor, implements the search method according to any one of claims 1 to 7.
